# EUROPÄISCHE PATENTSCHRIFT

(11) **EP 3 657 734 B1**
(45) Veröffentlichungstag und Bekanntmachung des Hinweises auf die Patenterteilung: **02.03.2022**
(21) Anmeldenummer: 19210857.9
(22) Anmeldetag: 22.11.2019
(51) Int. Cl.: G05B 19/042, H04L 1/00, H04L 12/26

(54) **IO LINK SCANNER UND ANZEIGER ZUR DEKODIERUNG DER KOMMUNIKATIONSINHALTE AUF EINER IO-LINK SCHNITTSTELLE.**
IO LINK SCANNER AND DISPLAY FOR DECODING COMMUNICATION CONTENT ON AN ACTIVE IO-LINK INTERFACE.
SCANNEUR ET INDICATEUR IO-LINK POUR LE DÉCODAGE DE CONTENU DE COMMUNICATION SUR UNE INTERFACE ACTIVE IO-LINK.

(30) Priorität: 26.11.2018 DE 102018009228
(43) Veröffentlichungstag der Anmeldung: 27.05.2020
(73) Patentinhaber: TEConcept GmbH, 79106 Freiburg (DE)
(72) Erfinder: Witte, Franz-Otto, 79331 Tenningen (DE); Molnar, Lorand, 6728 Szeged (HU); Zaj, Peter, 6723 Szeged (HU); Erdelyi, Gabor, 3626 Hangony (HU)
(74) Vertreter: Petersen, Frank

(56) Entgegenhaltungen:
- CN-A- 108 322 356
- DE-B3-102014 222 803
- US-A- 5 787 253
- US-A1- 2004 054 776
- US-A1- 2008 201 503
- US-A1- 2011 067 106

## Beschreibung

Die Erfindung betrifft ein Verfahren und eine Vorrichtung zur Dekodierung der Kommunikationsinhalte auf einer aktiven IO-Link Schnittstelle gemäß dem Oberbegriff der beigefügten Ansprüche 1 bzw. 12,

IO-Link ist eine Punkt-zu-Punkt Kommunikationsschnittstelle, vorzugsweise für industrielle Sensoren und Aktoren. Die Kommunikation erfolgt dabei zwischen einem IO-Link Master und IO-Link Geräten 'Devices' mittels eines nicht geschirmten 3-5 adrigen Kabels.

Die IO-Link Technologie ist gemäß IEC-61131-9 standardisiert. Der hierbei eingesetzte IO-Link Master dient in der Regel als Umsetzer auf Feldbusse oder andere netzwerkfähige Kommunikationsprotokolle.

Die Datenübertragung erfolgt im Halbduplexbetrieb und erlaubt es, im Zeitmultiplex zyklische Daten, die auch als Prozessdaten bezeichnet werden, sowie azyklische Daten, die als Kommandos, Parameter oder Ereignisse dienen, quasiparallel zu übertragen.

Das IO-Link System ist darauf ausgelegt, IO-Link Gerätedaten mit einer Steuerungseinrichtung auszutauschen, wobei die Steuerungseinrichtung üblicherweise nicht in einer räumlichen Nähe zum IO-Link Master oder Device platziert ist. In vielen industriellen Anlagen ist es jedoch erforderlich oder wünschenswert, die Prozessdaten vor Ort anzuzeigen oder diese sicher für Anwendungen wie 'predictive maintenance' oder 'condition monitoring' zu verwenden.

Dies ist bei einem IO-Link Signal jedoch nicht trivial, z.B. weil es im Halbduplex übertragen wird, und für einen Beobachter nicht unmittelbar ersichtlich ist, wer Sender oder Empfänger ist, und weil, je nach angeschlossenem Device, unterschiedliche Telegramm-Typen M-Sequence-Typen' verwendet werden, deren Kenntnis für eine Dekodierung unabdingbar ist, da die Länge und die Struktur der zyklischen und azyklischen Daten vom Device-Typ abhängig sind und zusätzlich bestimmte Mechanismen zur Behebung von Übertragungsfehlern durch Wiederholen bestimmter Sequenzen eingesetzt werden.

Bekannt sind Verfahren oder Vorrichtungen zur Analyse von IO-Link Signalen, wie der IO-Link Monitor der MESCO Engineering GmbH, Lörrach, DE, der GERMBEDDED IO-Link Analyzer der Germbedded GmbH, Winterthur, CH oder das IO-Link Diagnosis-Tool der Anmelderin.

Diese Systeme sind jedoch vorrangig für die Analyse von IO-Link Daten konzipiert und haben den Nachteil, dass sie einen Anwender mit detaillierten Kenntnissen des IO-Link Kommunikationsprotokolls erfordern.

Aufgabe der vorliegenden Erfindung besteht demgemäß darin, ein Verfahren und eine Vorrichtung anzugeben mit der Möglichkeit einer automatischen Erkennung des Übertragungsprotokolls der Synchronisation mit einer laufenden IO-Link Kommunikation. Sie verfügen auch nicht über Mechanismen zur Selektion, zur Konfiguration und Formatierung anzuzeigender Daten noch über Datenserver zur Weitergabe von IO-Link Daten.

Aus der US 2004/054776 A1 ist ein Verfahren vergleichbar mit den Merkmalen des Oberbegriffes von Anspruch 1 bzw. vergleichbar zu einer Vorrichtung entsprechend dem Oberbegriff von Anspruch 12 bekannt. Gemäß dem Oberbegriff wird vorausgesetzt, dass die Kommunikationsgeschwindigkeit, die IO-Link Betriebsart, der verwendete IO-Link M-Sequence Typ manuell oder automatisch erkannt werden und dass Informationsinhalte über eine Konfigurationsschnittstelle ausgewählt und formatiert zur Anzeige gebracht oder weitergeleitet werden. Aus der DE102014222803 B3 ist eine kapazitive Kopplung zum Abgriff von Kommunikationssignalen, die zwischen zwei Kommunikationseinheiten ausgetauscht werden, bekannt.

Weiterer ähnlicher Stand der Technik wird offenbart in US 2008/201503 A1, US 2011067106 A1, US 5 787 253 A oder CN 108 322 356 A.

Eine Aufgabe der vorliegenden Erfindung besteht darin, ein fehlertolerantes Verfahren und eine Vorrichtung anzugeben, welche das Signal einer IO-Link Kommunikation zwischen einem IO-Link-Master und einem IO-Link-Device abgreifen, sich hiermit synchronisieren und die übertragenen Daten dekodieren und zur Anzeige oder zur Auswertung weiterleiten können.

Insbesondere soll das erfindungsgemäße Verfahren fehlertolerant sein, so dass es auch bei Übertragungsfehlern oder bei Verlust der Synchronisation in der Lage ist, die Fehler auszublenden oder im laufenden Betrieb sich erneut aufzusynchronisieren.

Gemäß der Erfindung werden die IO-Link Daten kapazitiv ausgekoppelt und mit Hilfe eines A/D Wandlers digitalisiert, der entstehende digitale Datenstrom wird nach Filterung und Aufbereitung durch Signalverarbeitungssoftware in ein analoges, im wesentlichen zweiwertiges Signal zurückgewandelt und die darin kodierten UART-Frames werden mit Hilfe einer UART Schnittstellenhardwareeinheit dekodiert.

Bei diesem Vorgang ein Signal über einen A/D Wandler zu digitalisieren und dann per Software aufzubereiten und das so aufbereitete Signal wieder über einen Digital-zu-Analog-Umsetzer auszugeben, damit es über eine preisgünstige, optimierte serielle Schnittstelle dekodiert werden kann, ergibt erhebliche Kostenvorteile, da keine speziellen FPGAs oder CPLDs erforderlich sind, die ansonsten für Vorgänge dieser Art im Stand der Technik vorgeschlagen werden.

Desweiteren kann bei einer weiteren Ausführungsform der Erfindung der M-Sequence-Typ der operativen IO-Link Kommunikation durch Auswertung der Kommunikationsinhalte insbesondere im Startup Fall detektiert werden.

Vorzugsweise werden generell Funktionsblöcke wie Synchronizer, M-Sequence-Type-Detector und Decoder als Basiskomponenten insbesondere für eine automatische Erkennung der Datenstruktur vorgeschlagen.

So kann bei einer Weiterbildug der Erfindung der M-Sequence-Typ der operativen IO-Link Kommunikation insbesondere automatisch durch kombinierte Auswertung des Timings und der Prüfsummen ermittelt werden, wobei der Status der M-Sequence-Typ Ermittlung signalisiert wird. Somit kann ein mögliches Verfahren zur Synchronisation auf die IO-Link Kommunikation basieren auf der Analyse des Zeitverhaltens der IO-Link Kommunikation.

Alternativ kann der M-Sequence-Typ durch Nutzerinteraktion vorgegeben und mit Hilfe der M-Sequence-Typ Detektion verifiziert und das Ergebnis der Detektion signalisiert werden.

Es wird insbesondere vorgeschlagen, dass die zeitliche Lage einer M-Sequence bekannten Typs über Verschieben eines Datenfensters entsprechender Länge über den empfangenen Datenstrom ermittelt wird, wobei dessen korrekte Lage durch Neuberechnung der Checksummen CKT und CKS und deren Vergleich mit den übertragenen Checksummen ermittelt wird und wobei die Richtung der IO-Link Datenübertragung durch das potentielle MC Element an der ersten Stelle des Fensters definiert wird.

Dabei kann dann auch jedem UART Frame des IO-Link Telegramms ein Zeitstempel zugeordnet und die initiale Lage des verschiebbaren Datenfensters durch Auswertung der zeitlichen Lage der UART Frames bestimmt werden.

Bei einer weiteren bevorzugten Ausführungsform der Erfindung kann der Zustand der M-Sequence-Type Erkennung und der M-Sequence Synchronisation angezeigt werden. Dabei können von einem Nutzer selektierbare Prozessdaten auf einem Display insbesondere auch formatiert angezeigt werden.

In diesem Zusammenhang wird besonders vorgeschlagen, neben den Prozessdaten noch IO-Link Ereignisse zu signalisieren.

Bei einer weiter bevorzugten Ausführungsform der Erfindung werden übertragene Daten mit Hilfe eines Datenservers weitervermittelt.

Ein derartiger Datenserver kann mit einer Einheit zum Empfang und zur Auswertung der einem Device zugeordneten IO-Link Device Descriptor Datei 'IODD' versehen sein, die die weitervermittelten übertragenen Daten mit Formatierungs- und ergänzenden Informationen versieht.

Vorzugsweise verwendet der Datenserver dabei die Protokolle OPC UA und/oder MQTT, wobei die Weitervermittlung selektierbarer Kommunikationsinhalte über derartige Datenschnittstellen die Anwendungsbereiche des hier beschriebenen Scanners erheblich erweitert.

Weitere Vorteile und Merkmale der Erfindung ergeben sich aus der folgenden Beschreibung eines Ausführungsbeispiels. Dabei zeigt
- Fig. 1: den prinzipiellen Aufbau eines IO-Link Daten Scanners und Anzeigers,

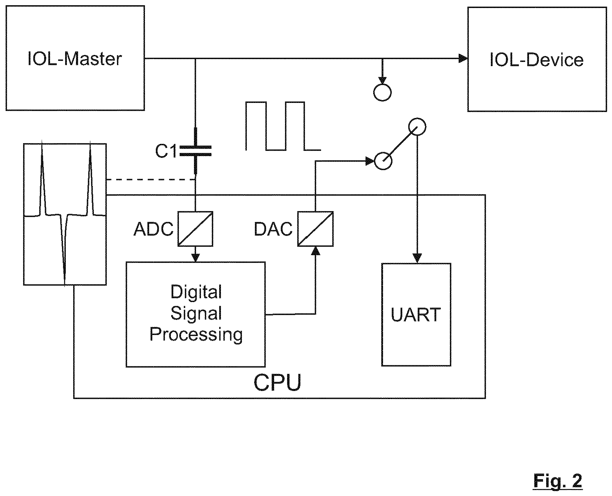

- Fig. 2: die prinzipielle Darstellung einer kapazitiven Auskoppelung eines IO-Link Signales,
- Fig. 3.: das Blockdiagramm eines IO-Link Scanners/Anzeigers,
- Fig. 4: den Aufbau von M-Sequence Typen,
- Fig. 5: den Aufbau eines M Sequence Control Byte,
- Fig. 6: die Struktur eines MC Byte,
- Fig. 7: eine Prinzipdarstellung der Cecksummenberechnung bei IO-Link,
- Fig. 8: die Prinzipskizze einer Frame-Type Detektion
- Fig. 9: ein M-Sequence Timing,
- Fig. 10: eine Prinzipskizze der Arbeitsweise eines Synchronizers,
- Fig. 11: eine Dateninterpretation mittels eines IODD-Interpreters.

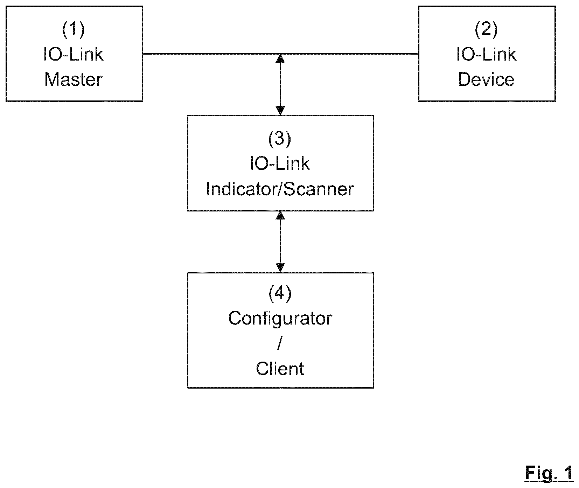

In der Fig. 1 erkennt man einen IO-Link Datenanzeiger (4), der die Datenkommunikation zwischen einem IO-Link Master (1) und einem IO-Link Device (2) über einen IO-Link Scanner (3) abgreift. Das elektrische und logische Format der Kommunikation ist in der IEC61131-9 detailliert beschrieben worden. Die in diesem Kontext relevanten Eigenschaften der Kommunikationsschnittstelle seien hier kurz dargestellt:

Die Kommunikation erfolgt über eine Datenleitung, über die ein binäres Signal geführt wird. Die Kodierung des binären Signals entspricht weitgehend der asynchronen seriellen Datenübertragung, die auch als UART Schnittstellenkommunikation bezeichnet wird. Bei IO-Link werden Daten im Halbduplex, das heißt abwechselnd vom Master und vom Device auf die Datenleitung gegeben. Die Geschwindigkeit der Datenübertragung erfolgt mit einer von drei durch das Device vorgegebenen Baudraten, nämlich 4.800 Bd, 38.400 Bd bzw. 230.400 Bd. Diese werden in der IO-Link Spezifikation als COM1, COM2 und COM3 bezeichnet.

Mit dem IO-Link Protokoll können IO-Link Master (1) und IO-Link Devices (2) zyklische Daten austauschen; diese werden bei IO-Link auch Prozessdaten genannt. Auch azyklische Daten, die auch als On-Request 'OD' Daten bezeichnet werden, können übertragen werden, wobei für jeden der Datentypen durch das Device ein Datenkontingent reserviert wird, so dass keine direkte Beeinflussung beider Datenkanäle gegeben ist.

Vor dem Start der eigentlichen IO-Link Kommunikation arbeitet ein Device im Standard -I/O oder SIO Mode. In diesem Mode werden jedoch keine Telegramme ausgetauscht, sondern die Kommunikationsinformation wird lediglich durch die logischen Pegel der Datenleitung repräsentiert.

Durch einen Aufweck-Mechanismus 'Wakeup' Sequence wird der SIO Mode in den IO-Link Mode überführt. Danach baut sich die IO-Link Kommunikation über mehrere Phasen, nämlich der 'STARTUP'-Phase und der 'PREOPERATE'-Phase auf.

Der Kommunikationsaufbau wird durch das Erreichen der 'OPERATE'-Phase abgeschlossen, bei der zusätzlich zyklische Datenkommunikation stattfindet. Durch einen Rückfallbefehl 'FALLBACK' kann der SIO Betrieb wieder restauriert werden.

Für die Auskopplung der IO-Link Datenkommunikation ist es in vielen Fällen anwendungsfreundlicher, wenn die IO-Link Leitung nicht unterbrochen oder galvanisch angezapft werden muss. Da das IO-Link Signal mit einer Signalamplitude von nominell 24 V und hohen Flankensteilheiten übertragen wird, kann es gut kapazitiv ausgekoppelt werden. Hierzu kann beispielsweise eine einfache leitende Hülle um ein ungeschirmtes IO-Link Kabel gelegt werden. Das ausgekoppelte Signal ist im Allgemeinen dann allerdings meist stark verformt und mit Störungen behaftet.

Bei dem hier beschriebenen Verfahren, wird das kapazitiv ausgekoppelte Signal zunächst mit Hilfe eines A/D Wandlers digitalisiert. Danach wird es mit Hilfe von sogenannten Entfaltungsfiltern, adaptiven nichtlinearen Signalformungsverfahren in ein rechteckförmiges Signal überführt, das bis auf eine, in diesem Zusammenhang nicht störende Signalverzögerung weitgehend einem direkt galvanisch ausgekoppelten Signal entspricht. Dieses digitalisierte Signal wird über eine Digital/Analog Wandlung zurückgewandelt und dann auf eine UART Schnittstelle eines Mikrocontrollers gegeben. Dieser wandelt das rekonstruierte IO-Link Signal in UART Frames um.

Das hier beschriebene Verfahren ist besonders, da eine alternative Dekodierung von UART Frames in Software nur mit großem Rechenaufwand und hohem Stromverbrauch realisierbar ist.

Da die kapazitive Signalauskopplung in manchen Fällen aufgrund von eingestreuten Störungen nicht ausreichend fehlerfrei durchführbar ist, bietet die hier vorgeschlagene Lösung auch die Möglichkeit, ersatzweise das originale galvanisch ausgekoppelte IO-Link der UART-Schnittstelle zuzuführen.

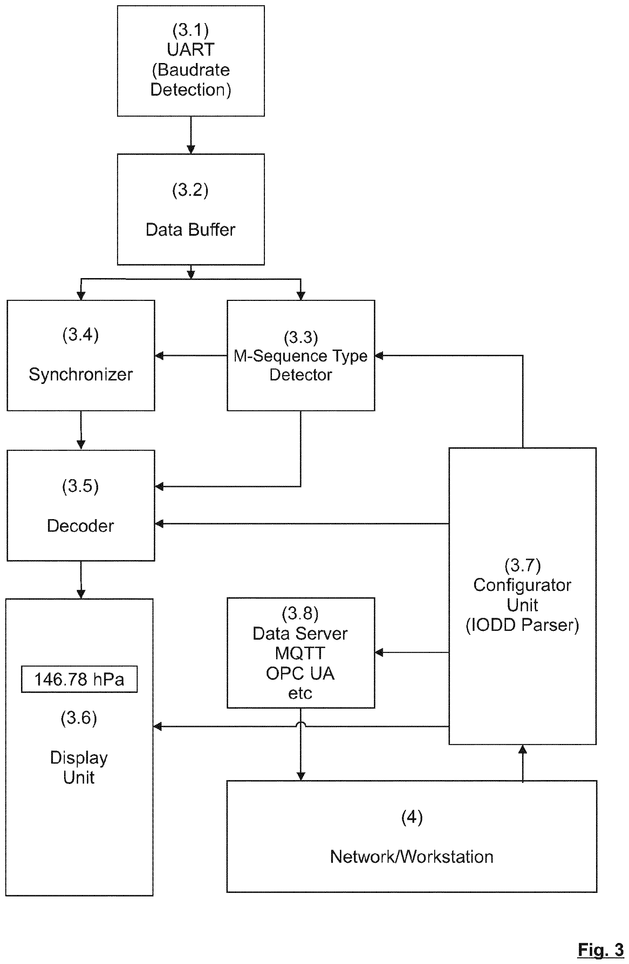

Fig. 3 zeigt den prinzipiellen Aufbau eines IO-Link Scanners. In einer ersten Stufe wird das IO-Link Signal über eine Auskopplungseinheit auf eine UART (3.1) geführt. Die vom Master oder die vom Device gesendeten Signale werden in eine Folge von digitalen Bytes (Oktetts) überführt, welche den logischen Inhalt der Datenkommunikation repräsentieren.

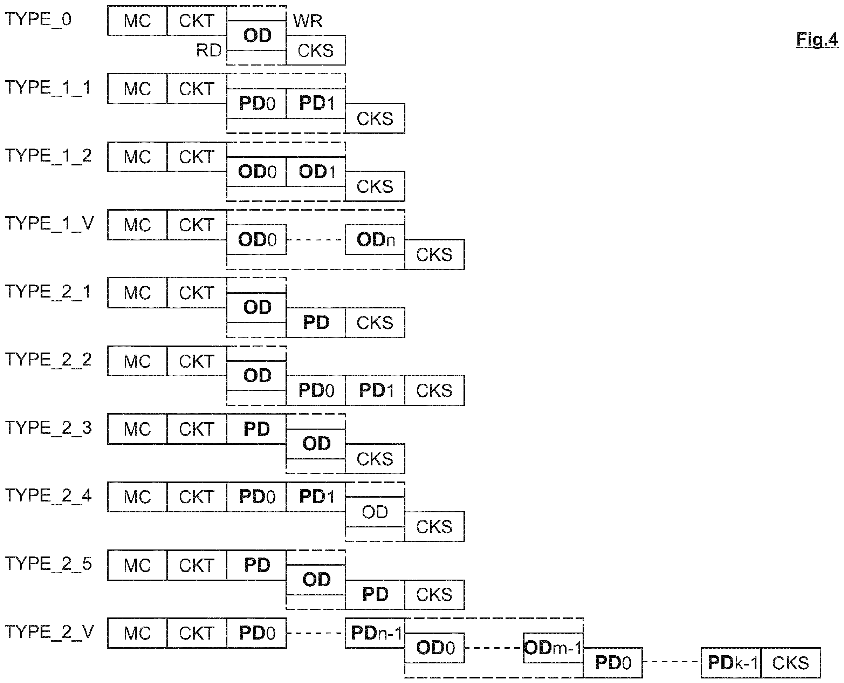

UART Schnittstellen verfügen heute in der Regel über eine automatische Baudratenerkennung. Bei Verwendung dieser Funktion, kann sichergestellt werden, dass über die UART Schnittstelle unabhängig von der aktuell verwendeten und erkannten Baudrate, ein gültiger Bytestrom empfangen werden kann. Die Folge empfangener UART Frames ist dann gemäß der IO-Link Spezifikation zu dekodieren. Hierzu ist der prinzipielle Aufbau der elementaren IO-Link Telegrammrahmenstruktur zu berücksichtigen, wie sie in Fig. 4 gezeigt wird.

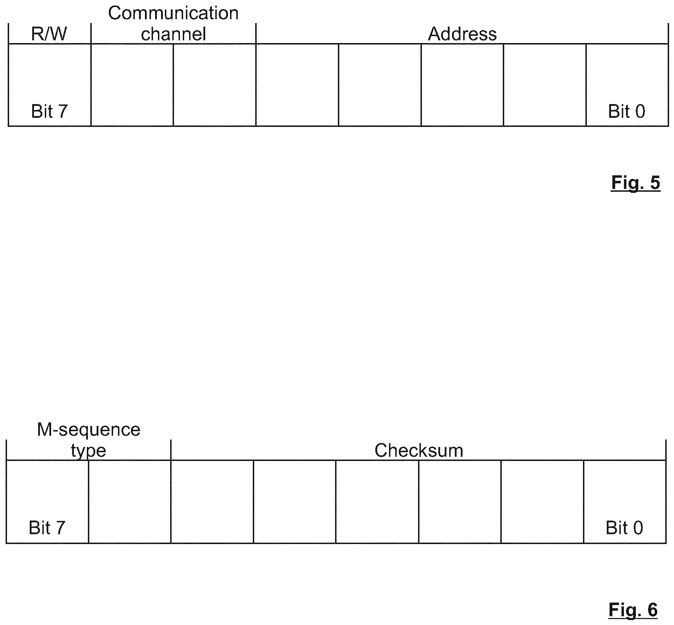

Jede M-Sequence beginnt mit einem vom Master ausgesandten M-Sequence-Control Byte 'MC' (Fig. 5), gefolgt von einer Checksumme 'CTK', die über alle vom Master ausgesandten Bytes gebildet wird.

Das Device antwortet auf die Master-Anfrage mit Antwort-Bytes, wobei das letzte Antwort-Byte die Checksumme des Devices oder Slaves 'CKS' beinhaltet. Azyklische Daten 'OD' werden am Ende der Masteranfrage oder am Beginn der Device-Antwort übertragen, wobei diese bei einem Schreibtelegramm vom Master und bei einem Lesetelegram vom Device stammen.

Es ist festzuhalten, dass die Gesamtlänge einer M-Sequence bei einem bestimmten Device im OPERATE Betriebszustand konstant ist, dass die Checksumme des Masters immer an 2. Stelle des Telegramms steht und dass die Checksumme des Devices immer an letzter Stelle steht. Die vom Device festgelegte Länge der M-Sequence kann zwischen 4 Bytes und 99 Bytes betragen.

Ein mögliches Verfahren zur Synchronisation auf die IO-Link Kommunikation basiert auf der Analyse des Zeitverhaltens der IO-Link Kommunikation. Hierbei kann man sich zunutze machen, dass zwischen den ausgesendeten Bytes des Masters nicht mehr als die Dauer der Übertragung für ein UART Bit - auch 'TBIT' genannt - liegen darf, dass das Device innerhalb von 1 - 10 TBIT auf die Anfrage des Masters antworten muss und dass zwischen den Antwort-Bytes des Devices Pausen von nicht mehr als 3 TBIT auftreten dürfen. Außerdem ist in der IO-Link Spezifikation festgeschrieben, dass der Master seine Anfragen im OPERATE Betrieb in einer festgelegten Zykluszeit ausführen muss, die allerdings einen Toleranzbereich von 0 % bis +10 % der nominalen Zykluszeit überstreichen darf. Die minimale nominale Zykluszeit ist durch das Device vorgegeben. Masterseitig kann die reale Zykluszeit allerdings in Richtung größerer Zykluszeiten verlängert werden.

Diese Randbedingungen führen dazu, dass in der Regel eine größere zeitliche Lücke zwischen dem Ende der Device-Antwort und dem Beginn der Masteranfrage liegt.

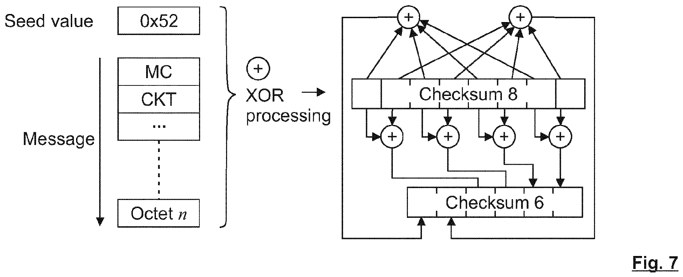

Die Checksummen für die M-Sequences des Masters werden bei IO-Link Standard gemäß der Darstellung in Fig. 7 ermittelt. Hierbei werden alle ausgehenden Bytes mit Hilfe einer Exklusiv-Oder Operation verknüpft und das Ergebnis-Byte wird anschließend über eine kombinatorische Logik auf 6-Bit komprimiert. Die zwei übrigen Bits werden für die Signalisierung des M-Sequence-Typs verwendet, wie in Fig. 6 gezeigt.

Das Ergebnis der Checksummenbildung 'CKT' wird an der zweiten Position des Mastertelegramms eingefügt. Bei der Device-Antwort findet die Checksummenbildung in gleicher Weise statt, allerdings wird bei der Device-Antwort das Checksummenbyte 'CKS' am Ende der Device-Antwort eingefügt. Das 'CKS' Byte enthält in den beiden höchstwertigen Bits allerdings nicht den M-Sequence Type, sondern ein Event- und ein Validity-Bit, mit dessen Hilfe das Device Ereignisse oder ungültige Prozessdaten melden kann.

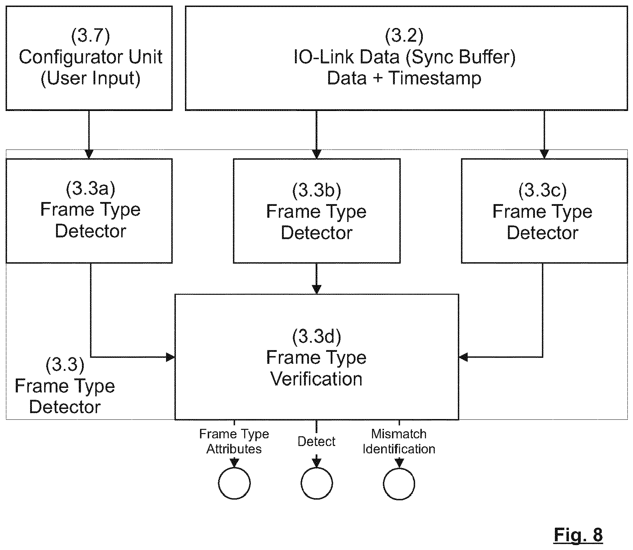

Zur Dekodierung eines IO-Link Telegramms ist die Kenntnis des M-Sequence-Typs für den normalen Betriebszustand 'OPERATE' erforderlich. Diese Information kann dem IO-Link Scanner über die in den Fig. 3 oder Fig. 8 dargestellte Konfigurations-Einheit (3.7) vom Nutzer zur Verfügung gestellt werden. Falls dieses nicht erfolgt, zum Beispiel weil dem Nutzer diese Information nicht vorliegt, ist eine automatische Detektion des M-Sequence Typs erforderlich, die Teil dieser Erfindung ist.

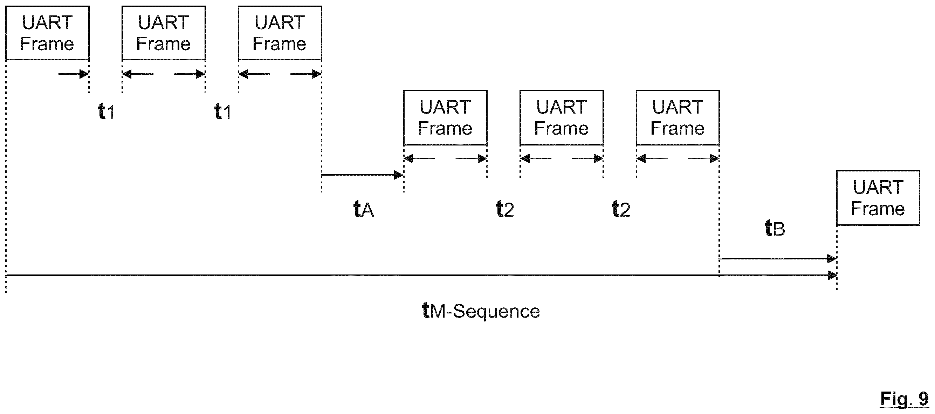

Bei der Erkennung des M-Sequence-Typs sind verschiedene Betriebszustände des Devices zu berücksichtigen (siehe Fig. 9) .
a) Der IO-Link Scanner erhält die M-Sequence-Kenndaten durch Nutzereingabe.
b) Der IO-Link Scanner beobachtet das Hochstarten des Devices. In diesem Fall geht das Device nach einem Wakeup-Impuls, der auch als Synchronisation dient, in den Startup-Modus, bei dem immer der M-Sequence Typ-0 verwendet wird. Im Startup-Modus werden bei IO-Link Kenndaten vom Device abgefragt. Anhand dieser Kenndaten wird der verwendete M-Sequence Typ eindeutig gekennzeichnet.
c) Der IO-Link Scanner hat keine à priori Informationen über den M-Sequence Typ. Dieser Betriebszustand tritt zum Beispiel auf, wenn der IO-Link Scanner erst mit einem IO-Link Signal verbunden wird, nachdem die IO-Link Kommunikation bereits aktiv war. Eine Erkennung der M-Sequence Attribute ist in diesem Fall nur möglich, wenn der Dateninhalt der übertragenen M-Sequences bestimmte Kennelemente aufweist. So kann zum Beispiel die Aufteilung in PD_{In}, PD_{Out} und On-Request Datenanteile aufgrund der Telegramminhalte nur ermittelt werden, wenn abwechselnd Schreib- und Lesesequenzen übertragen werden und zusätzlich am Ende der Masteranfrage und/oder am Beginn der Device-Antwort keine nullwertigen Bytes übertragen werden, da diese die Checksumme nicht ändern. In Kombination mit der Auswertung der Zeitstempel (Timestamps) jedes Bytes können allerdings in der Regel Rückschlüsse auf den Beginn einer M-Sequence und auf den Beginn der Device-Antwort gezogen werden (siehe Fig. 9 und Tab. 1). Durch diese zeitlichen Vorgaben können die in der Fig. 9 gezeigten Zeiten t_{A} und t_{B}, die das Ende der Masteranfrage und das Ende der Device-Antwort kennzeichnen, häufig erkannt werden, da t_{A} bei realen Devices in der Regel größer als 1 t_{BIT} ist, und t_{B} in der Regel größer als die in Fig. 9 gezeigte Zeit t₂.

Der Frame Type Detector stellt drei Ausgangssignale zur Verfügung. Das erste Ausgangssignal beschreibt die erkannten Frame Type Attribute, d.h. die Länge der M-Sequence, die Länge der PD_{In}, PD_{Out} und der OD-Daten, das 2. Ausgangssignal ist ein logisches Detect-Signal, das anzeigt, ob der Frame Typ erkannt worden ist und das 3. Ausgangssignal zeigt an, dass es Inkonsistenzen bei der Erkennung gibt, zum Beispiel zwischen dem vom Nutzer eingegebenen M-Sequence Typ und dem durch ein Autodetektionsverfahren erkannten M-Sequence Typ.

**Tab. 1 M-Sequence Timing Table**

| Parameter | Min | Max | Unit |
|---|---|---|---|
| t₁ | 0 | 1 | T_{BIT} |
| t₂ | 0 | 3 | T_{BIT} |
| t_{A} | 1 | 10 | T_{BIT} |
| t_{M-Sequence} | (m+n)ⁱ * 11 T_{BIT} + t_{A} + (m-1) * t₁ + (n-1) * t₂ | 132.8 10⁻³ | s |
| t_{B} | | 132.8 10⁻³ - t_{M-Sequence,Min} | s |

| | | | |
|---|---|---|---|
| ¹ m=Länge der Master-,n=Länge der Device-Antwort in UART Frames | | | |

Im Fall einer erfolgreichen Erkennung des Frame Typs können die eingehenden IO-Link Signale dekodiert werden.

Hierzu ist es allerdings zusätzlich erforderlich, den Beginn der M-Sequence zu erkennen, was durch den in Fig. 3 gezeigten Synchronizer 3.4 erfolgt. Das Detect-Signal des dort dargestellten Frame-Typ Detectors 3.3 kann dabei als Erkennungshilfe für den Synchronizer dienen. Dieser muss jedoch so ausgelegt sein, dass er unabhängig von der Erkennungshilfe eine zuverlässige Erkennung des Starts einer jeden M-Sequence liefern kann.

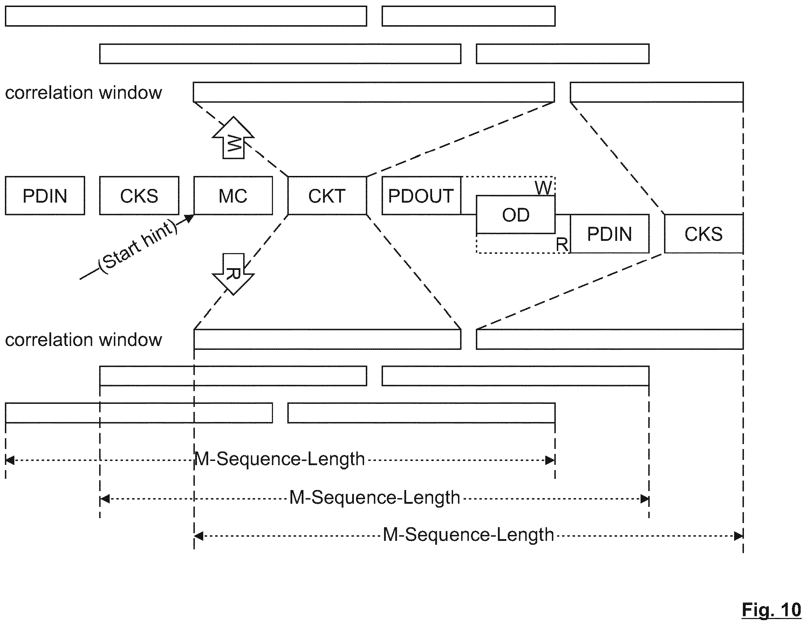

Die prinzipielle Arbeitsweise des Synchronizers wird anhand von Fig. 10 erläutert.

Jede M-Sequence beginnt mit einem M-Sequence Control Telegramm 'MC'. Das höchstwertige Byte von MC legt fest, ob die On-Request 'OD' Daten vom Master 'W' oder vom Device ⁱⁱ'R' gesendet werden. Das 2. Byte des Masters beinhaltet die Checksumme 'CKT' über die vom Master ausgesandten Bytes, die im Falle eines Schreibtelegrams auch OD Daten umfassen. Die Device Antwort, die im Falle eines Lesetelegramms die OD Daten enthält schließt mit der Checksumme 'CKS' ab.

Das hier beschriebene Synchronisationsverfahren legt ein Korrelationsfenster mit der Länge einer M-Sequence über eine Folge von IO-Link-Daten, wobei die Anfangsposition des Korrelationsfensters durch einen Starthinweis gewählt werden kann. Wenn das Korrelationsfenster korrekt liegt, muss das erste Byte das MC Kommando enthalten. Das höchstwertige Bit des MC-Telegramms bestimmt, ob es sich um eine Lese-'R' oder ein Schreibtelegramm 'W' handelt. Unter Berücksichtigung des höchstwertigen Bits des MC-Kommandos werden die Checksummen 'CKT' und 'CKS' berechnet und mit den im Empfangsdatenstrom enthaltenen, übertragenen Checksummen verglichen.

Bei Übereinstimmung der berechneten und der übertragenen Checksummen, ist die Startposition der M-Sequence mit hoher Wahrscheinlichkeit korrekt. Die Wahrscheinlichkeit einer Fehlerkennung kann durch Verwendung eines Starthinweises und durch Checksummenvergleich aufeinanderfolgender M-Sequences weiter reduziert werden.

Nach Erkennung des Frame-Typs und entsprechender Synchronisierung, ist die weitere Auswertung der IO-Link Datenübertragung mit Hilfe der im IO-Link Standard angegeben Verfahren möglich.

Für eine Anwendung als IO-Link Anzeiger, besteht die Möglichkeit, dass ein Nutzer bestimmte Elemente der Prozessdaten durch Angabe der Binärposition im Datenstrom nebst einer zugehörigen Anzeigeeinheit wie °C vorgeben kann. Die selektieren Prozessdaten können durch eine lineare Skalierung mittels Offset und Gradient in einen Fließkommawert zur Anzeige umgewandelt werden (siehe Block 3.6 in Fig. 3).

Alternativ kann dem IO-Link Scanner über eine digitale Schnittstelle die IO-Link Device Beschreibungsdatei zugeführt werden, welche in der in Fig. 3 dargestellten Konfigurator Einheit 3.7 geparst wird. Hiermit stehen dem IO-Link Scanner Informationen über alle Parameter, Warn- und Fehlermeldungen und Datenstrukturen eines IO-Link Devices zur Verfügung.

Wie in Fig. 11 dargestellt, ist es damit möglich, den übertragenen Rohdaten eine semantische Bedeutung zuzuweisen. Die derart aufbereiteten Daten können mit Hilfe eines Datenservers, zum Beispiel in Form eines OPC UA Servers oder eines MQTT Servers an entsprechende Clients weitervermittelt werden.

## Patentansprüche

1. Verfahren zur Dekodierung der Inhalte einer IO-Link Kommunikation auf einer aktiven IO-Link Schnittstelle wobei eine Kommunikationsgeschwindigkeit, eine IO-Link Betriebsart, ein verwendeter IO-Link M-Sequence Typ erkannt werden und wobei Informationsinhalte über eine Konfigurationsschnittstelle ausgewählt und formatiert zur Anzeige gebracht oder weitergeleitet werden, **dadurch gekennzeichnet, dass** IO-Link Daten kapazitiv ausgekoppelt und mit Hilfe eines A/D Wandlers digitalisiert werden, der entstehende digitale Datenstrom nach Filterung und Aufbereitung durch Signalverarbeitungssoftware in ein analoges, im wesentlichen zweiwertiges Signal zurückgewandelt wird und darin kodierte UART-Frames mit Hilfe einer UART Schnittstellenhardwareeinheit dekodiert werden.

2. Verfahren nach Anspruch 1,
bei dem der M-Sequence-Typ der operativen IO-Link Kommunikation durch Auswertung von Kommunikationsinhalten in einem Startup Fall detektiert wird.

3. Verfahren nach einem oder mehreren der vorstehenden Ansprüche,
bei dem der M-Sequence-Typ der operativen IO-Link Kommunikation durch kombinierte Auswertung eines Timings und von Prüfsummen ermittelt wird, wobei ein Status der M-Sequence-Typ Ermittlung signalisiert wird.

4. Verfahren nach einem oder mehreren der vorstehenden Ansprüche,
wobei der M-Sequence-Typ durch Nutzerinteraktion vorgegeben wird und mit Hilfe einer M-Sequence-Typ Detektion verifiziert und das Ergebnis der Detektion signalisiert wird.

5. Verfahren nach einem oder mehreren der vorstehenden Ansprüche,
wobei die zeitliche Lage einer M-Sequence bekannten Typs über Verschieben eines Datenfensters entsprechender Länge über den empfangenen Datenstrom ermittelt wird, wobei dessen korrekte Lage durch Neuberechnung von Checksummen CKT und CKS und deren Vergleich mit übertragenen Checksummen ermittelt wird und wobei die Richtung der IO-Link Datenübertragung durch ein potentielles MC Element an der ersten Stelle des Fensters definiert wird.

6. Verfahren nach einem oder mehreren der vorstehenden Ansprüche,
wobei jedem UART Frame der IO-Link Daten ein Zeitstempel zugeordnet wird und die initiale Lage eines verschiebbaren Datenfensters durch Auswertung einer zeitlichen Lage der UART Frames bestimmt wird.

7. Verfahren nach einem oder mehreren der vorstehenden Ansprüche,
bei dem der Zustand der M-Sequence-Type Erkennung und einer M-Sequence Synchronisation angezeigt wird, und wobei von einem Nutzer selektierbare Prozessdaten auf einem Display insbesondere formatiert angezeigt werden.

8. Verfahren nach Anspruch 7,
wobei neben den Prozessdaten noch IO-Link Ereignisse signalisiert werden.

9. Verfahren nach einem oder mehreren der vorstehenden Ansprüche,
wobei übertragene Daten mit Hilfe eines Datenservers weitervermittelt werden.

10. Verfahren nach Anspruch 9,
wobei der Datenserver mit einer Einheit zum Empfang und zur Auswertung einer einem Device zugeordneten IO-Link Device Descriptor Datei 'IODD' versehen ist, die die weitervermittelten übertragenen Daten mit Formatierungs- und ergänzenden Informationen versieht.

11. Verfahren nach einem der Ansprüche 9 oder 10, wobei der Datenserver die Protokolle OPC UA und/oder MQTT verwendet.

12. Vorrichtung zur Durchführung des Verfahrens nach einem oder mehreren der Ansprüche 1 bis 11.

## Claims

1. Method for decoding the contents of an IO link communication on an active IO link interface, wherein a communication speed, an IO link operating type, a used IO link M-sequence type are identified and wherein information contents are selected via a configuration interface and displayed or forwarded in formatted form, **characterized in that**
IO link data are capacitively coupled out and digitized using an A/D converter, the resultant digital data flow, following filtering and processing by signal processing software, is converted back into an analogue substantially two-value signal and UART frames encoded therein are decoded using a UART interface hardware unit.

2. Method according to Claim 1,
in which the M-sequence type of the operative IO link communication is detected by evaluating communication contents in a start-up case.

3. Method according to one or more of the preceding claims,
in which the M-sequence type of the operative IO link communication is ascertained through combined evaluation of a timing and of checksums, wherein a status of the M-sequence type ascertainment is signalled.

4. Method according to one or more of the preceding claims,
wherein the M-sequence type is specified through user interaction and verified using an M-sequence type detection and the result of the detection is signalled.

5. Method according to one or more of the preceding claims,
wherein the temporal position of an M-sequence of a known type is ascertained by displacing a data window of an appropriate length over the received data flow, wherein the correct position thereof is ascertained by recalculating checksums CKT and CKS and comparing them with transmitted checksums, and wherein the direction of the IO link data transmission is defined by a potential MC element at the first position of the window.

6. Method according to one or more of the preceding claims,
wherein each UART frame of the IO link data is assigned a timestamp and the initial position of a displaceable data window is determined by evaluating a temporal position of the UART frames.

7. Method according to one or more of the preceding claims,
in which the state of the M-sequence type identifier and an M-sequence synchronization is displayed, and wherein process data able to be selected by a user are displayed on a display, in particular in formatted form.

8. Method according to Claim 7,
wherein IO link events are also signalled in addition to the process data.

9. Method according to one or more of the preceding claims,
wherein transmitted data are forwarded by way of a data server.

10. Method according to Claim 9,
wherein the data server is provided with a unit for receiving and for evaluating an IO link device descriptor file 'IODD' assigned to a device, which file provides the forwarded transmitted data with formatting information and additional information.

11. Method according to either of Claims 9 and 10, wherein the data server uses the OPC UA and/or MQTT protocols.

12. Device for performing the method according to one or more of Claims 1 to 11.

## Revendications

1. Procédé pour décoder les contenus d'une communication IO-Link sur une interface IO-Link active, une vitesse de communication, un mode de fonctionnement IO-Link, un type de séquence M IO-Link utilisée étant reconnus et les contenus d'information étant sélectionnés par le biais d'une interface de configuration puis affichés formatés ou retransmis,
**caractérisé en ce que**
les données IO-Link sont découplées de manière capacitive et numérisées à l'aide d'un convertisseur A/N, le flux de données numérique produit est reconverti, après filtrage et conditionnement par un logiciel de traitement de signal, en un signal analogique sensiblement bivalent et les trames UART qui y sont contenues sont décodées à l'aide d'une unité matérielle d'interface UART.

2. Procédé selon la revendication 1, avec lequel le type de séquence M de la communication IO-Link opérationnelle est détecté par interprétation des contenus de communication dans un cas de démarrage.

3. Procédé selon une ou plusieurs des revendications précédentes, avec lequel le type de séquence M de la communication IO-Link opérationnelle est déterminé par une interprétation combinée d'un cadencement et de sommes de contrôle, un état de la détermination du type de séquence M étant signalé.

4. Procédé selon une ou plusieurs des revendications précédentes, le type de séquence M étant prédéfini par interaction de l'utilisateur et vérifié à l'aide d'une détection du type de séquence M et le résultat de la détection étant signalé.

5. Procédé selon une ou plusieurs des revendications précédentes, la position dans le temps d'une séquence M d'un type connu étant déterminée par décalage d'une fenêtre de données de longueur correspondante sur le flux de données reçu, sa position correcte étant déterminée par un nouveau calcul des sommes de contrôle CKT et CKS et leur comparaison avec les sommes de contrôle transmises, et la direction de la transmission de données IO-Link étant définie par un élément MC potentiel au niveau de la première position de la fenêtre.

6. Procédé selon une ou plusieurs des revendications précédentes, une estampille temporelle étant associée à chaque trame UART des données IO-Link et la position initiale d'une fenêtre de données décalable étant définie par interprétation d'une position dans le temps des trames UART.

7. Procédé selon une ou plusieurs des revendications précédentes, avec lequel l'état de la reconnaissance du type de séquence M et d'une synchronisation de séquence M est affiché, et des données de processus pouvant être sélectionnées par un utilisateur étant affichées, notamment formatées, sur un dispositif d'affichage.

8. Procédé selon la revendication 7, des événements IO-Link étant en plus signalés en plus des données de processus.

9. Procédé selon une ou plusieurs des revendications précédentes, les données transmises étant transférées à l'aide d'un serveur de données.

10. Procédé selon la revendication 9, le serveur de données étant pourvu d'une unité destinée à recevoir et à interpréter un fichier descripteur d'appareil IO-Link « IODD » associé à un appareil, laquelle dote les données transmises transférées d'informations de formatage et complémentaires.

11. Procédé selon l'une des revendications 9 ou 10, le serveur de données utilisant le protocole OPC UA et/ou MQTT.

12. Arrangement pour mettre en œuvre le procédé selon une ou plusieurs des revendications 1 à 11.
